Europäisches Patentamt

European Patent Office

Office européen des brevets

(11) Veröffentlichungsnummer: **0 296 342**
**A2**

## (12) EUROPÄISCHE PATENTANMELDUNG

(21) Anmeldenummer: 88107277.1

(22) Anmeldetag: 06.05.88

(51) Int. Cl.⁴ **B60T 13/14**

(30) Priorität: 24.06.87 DE 3720803

(43) Veröffentlichungstag der Anmeldung:
**28.12.88 Patentblatt 88/52**

(84) Benannte Vertragsstaaten:
**DE FR GB SE**

(71) Anmelder: **ROBERT BOSCH GMBH**
**Postfach 50**
**D-7000 Stuttgart 1(DE)**

(72) Erfinder: **Kehl, Georg**
**Taläckerstrasse 61**
**D-7000 Stuttgart 40(DE)**
Erfinder: **Siegel, Heinz, Ing. grad.**
**Hohenloher Strasse 86**
**D-7000 Stuttgart 40(DE)**

(54) **Bremsanlage.**

(57) Es wird eine Bremsanlage mit einem Hauptbremszylinder mit mindestens einer Bremskammer für zumindest einen Bremskreis und einem Bremskraftverstärker vorgeschlagen. Dieser Bremskraftverstärker ist über Servodruckleitung mit einem Speicher und/oder einer Pumpe zum Zuführen von Druckmedium verbunden, wobei in die Servodruckleitung ein Druckminderventil eingeschaltet ist. Dieses Druckminderventil hat andererseits einen Anschluß über eine Druckleitung an zumindest den einen Bremskreis. Dabei kann das Druckminderventil drei Schaltstellungen einnehmen. In einer ersten Schaltstellung bei normalem Bremsdruck ist die Servodruckleitung zwischen Bremskraftverstärker und Speicher und/oder Pumpe offen. Bei Überschreiten eines bestimmten Druckes ist die Servodruckleitung in einer zweiten Schaltstellung verschlossen. Wird dann noch ein weiterer Druckgrenzwert überschritten, so wird die Servodruckleitung mit einer Rückflußleitung verbunden, so daß sich der Bremskraftverstärker entladen kann.

Fig.1

EP 0 296 342 A2

## Bremsanlage

### Stand der Technik

Die Erfindung betrifft eine Bremsanlage gemäß Gattung des Hauptanspruches.

Eine derartige Bremsanlage ist beispielsweise aus der DE-OS 29 21 275 bekannt. Dort ist bereits auch das Problem angesprochen, daß bei einer Bremsanlage mit einem Bremskraftverstärker immer die Summe aus Pedalkraft und Servokraft wirkt. Dabei können in den einzelnen Bremskreisen, insbesondere bei einer Panik-Bremsung, sehr hohe Bremsdrücke auftreten. Dementsprechend muß die gesamte Bremsanlage dimensioniert sein, d. h. die einzelnen Bremskreise und die dazugehörenden Komponenten, wie Bremsleitung und Radbremszylinder müssen sowohl die hohen Pedaldrücke als auch zusätzlich eine volle Verstärkung des Bremskraftverstärkers aushalten können. Dies bedeutet einen erheblich höheren Materialaufwand. Hinzu kommt, daß auch die einzelnen Dichtungen erheblichen Belastungen ausgesetzt sind. Aus diesem Grunde werden in der DE-OS 29 21 275 bereits Druckminderventile vorgeschlagen, welche in dem Augenblick wirksam werden, wenn zu hohe Drücke auftreten. Diese Druckminderventile bewirken, daß keine weitere Speisung des Bremskraftverstärkers stattfindet, sondern dieser sich über eine Rückflußleitung entlädt. Probleme treten bei den dort gezeigten 3/2-Wegeventilen vor allem in Bezug auf ihre Dichthaltung auf. Ferner hat es sich als ungünstig erwiesen, wenn der Bremskraftverstärker beim Einschalten des Druckminderventils sofort entladen wird. Hierdurch wird unnötigerweise Bremsflüssigkeit in den Vorratsbehälter gefördert und muß von dort wieder durch die Pumpe entnommen werden.

### Vorteile der Erfindung

Eine Bremsanlage mit den Merkmalen des Hauptanspruches verwendet dagegen ein Druckminderventil, welches drei Schaltstellungen einnehmen kann. Bei normalem Bremsdruck ist die Servodruckleitung zwischen Bremskraftverstärker und Speicher und/oder Pumpe für die Servo-Bremsflüssigkeit offen. Überschreitet der Bremsdruck einen vorbestimmten Druck, so wird das Druckminderventil in eine zweite Schaltstellung verbracht. In dieser Schaltstellung ist die Servodruckleitung unterbrochen, so daß weder die Pumpe neue Servo-Bremsflüssigkeit fördern kann, noch Bremsflüssigkeit aus dem Bremskraftverstärker zurückfließt. Das bedeutet, daß die Servokraft über einen bestimmten Bereich hin konstant bleibt und lediglich die Fußpedalkraft wirksam wird.

Überschreitet die Fußpedalkraft jedoch zusätzlich einen weiteren Druckgrenzwert, so schaltet das Druckminderventil in eine dritte Schaltstellung, in welcher die Servodruckleitung mit einer Rückflußleitung verbunden wird. Damit entlädt sich der Bremskraftverstärker, wodurch eine Druckminderung eintritt.

Für die drei Schaltstellungen des Druckminderventils ist ein Steuerschieber in einer Axialbohrung vorgesehen. Dieser Steuerschieber wird einerseits von einem Bolzen angegriffen, welcher unter dem Druck der Druckleitung steht. Andererseits stützt sich der Steuerschieber gegen eine Druckfeder ab. Diese Druckfeder ist so ausgelegt, daß sie erst bei Überschreiten eines bestimmten Druckes in der Druckleitung nachgibt und so ein Verschieben des Steuerschiebers zuläßt.

In einem bevorzugten Ausführungsbeispiel soll die Axialbohrung einen Stufenzylinder durchsetzen, welcher in eine Stufenbohrung eines Gehäuses eingesetzt ist. Zum Anschluß an die Servodruckleitung, die Leitung zur Pumpe bzw. zum Speicher, die Rückflußleitung und die Druckleitung sind jeweils Radialbohrungen in dem Gehäuse vorgesehen, welche über einen vom Stufenzylinder mit der Stufenbohrung gebildeten jeweiligen Ringraum bzw. über eine Bodenkammer mit der Axialbohrung in Verbindung stehen. In der Bodenkammer soll bevorzugt der Bolzen angeordnet sein, welcher den Steuerschieber andererseits der Druckfeder beaufschlagt. Es versteht sich von selbst, daß die einzelnen Ringräume bzw. die Bodenkammer zueinander mittels Ringdichtungen abgedichtet sind, so daß sich insgesamt ein absolut dichtes System ergibt. Dies ist einer der wesentlichen Vorteile der vorliegenden Erfindung.

Ferner weist der Steuerschieber zwei Ringflansche auf, welche zwischen sich einen Verbindungskanal ausformen. Über diesen Verbindungskanal steht die Servodruckleitung mit dem Speicher bzw. der Pumpe in Normalstellung des Druckminderventils in Verbindung. Dabei sind die Ringflansche so ausgelegt, daß sie in der Axialbohrung gleiten. Allerdings sind sie nicht abgedichtet gegenüber der Axialbohrung, da hierdurch ein unkontrollierbarer Reibungsverlust auftreten könnte. Dies eröffnet allerdings die Möglichkeit, daß Servo-Bremsflüssigkeit über beide Ringflansche in benachbarte Räume entweichen kann. Um danach jedoch weitere Leckagen zu verhindern, ist einmal zwischen dem Steuerschieber und dem Bolzen ein Ventil vorgesehen, welches bei normalem Bremsdruck geschlossen ist. Dieses Ventil besteht bevorzugt aus einem durch einen Ringflansch gebildeten Ventilsitz, auf welchen eine Kugel auftrifft. Erhöht sich der Bremsdruck über einen vorbestimmten Wert, so trifft der Bolzen auf die Kugel und hebt diese von ihrem Sitz ab. Damit wird der vor der Kugel belegte Ventilraum, in dem sich möglicherweise Servo-Bremsflüssigkeit infolge von Ringflansch-Leckagen befindet, geöffnet und diese Leckagen können zur Rückflußleitung, welche nach dem Ventil angeordnet ist, abfließen.

Gleichzeitig überfährt aber der erste Ringflansch des Steuerschiebers die Bohrung zur Servodruckleitung, d. h. zum Bremskraftverstärker, und verschließt diese. Hierdurch wird die Verbindung zur Pumpe bzw. zum Speicher unterbrochen.

Sollte sich der Bremsdruck wesentlich weiter erhöhen, so überfährt der Steuerschieber - schlußendlich die Öffnung zur Servodruckleitung, d. h. zum Bremskraftverstärker vollständig, so daß diese mit dem Ventilraum verbunden wird. Nunmehr kann Bremsflüssigkeit aus dem Bremskraftverstärker in diesen Ventilraum zurückfließen und durch den Ventilsitz in die Rückflußleitung zum Vorratsbehälter gelangen.

Gegenüber dem Ventil aus Ventilsitz und Kugel geht der Steuerschieber nach seinem zweiten Ringflansch in einen Bolzenabschnitt über. Dieser Bolzenabschnitt hat bevorzugt einen Durchmesser, der demjenigen des Ventilsitzes entspricht. Dadurch ist die gesamte Ventilanordnung kraftausgeglichen, so daß beim Öffnen des Ventilsitzes keine Druck sprünge entstehen. Zudem durchzieht den Steuerschieber eine Querbohrung vom Ventilraum zu dem den Bolzenabschnitt umgebenden Ringraum. Damit sind die Räume vor und hinter dem Steuerschieber druckausgeglichen.

Dieser Ringraum hinter dem zweiten Ringflansch wird von einem Dichtring nach außen abgedichtet. Somit können auch hier auftretende Leckagen durch den zweiten Ringflansch nicht entweichen.

Der Bolzenabschnitt trifft dann im übrigen auf einen Gleitbolzen, welcher von der Druckfeder umfangen ist und sich gegen diese abstützt. Da dieser Gleitbolzen unter dem Druck des Steuerschiebers häufige Axialbewegungen vollführen muß, sollte er mittels einer Führung geführt sein.

Durch dieses erfindungsgemäße Druckminderventil wird ein absolut dichtes Ventil erhalten, welches zudem ein häufiges Speichernachladen unnötig macht.

Zeichnung

Die Erfindung wird nachfolgend anhand der Zeichnung näher erläutert. Es zeigen:

Figur 1 ein Blockschaltbild einer Bremsanlage mit einem im Längsschnitt dargestellten Hauptbremszylinder;

Figur 2 einen teilweise dargestellten Längsschnitt durch ein erfindungsgemäßes Druckminderventil.

In einem als Stufenkolben ausgebildeten Hauptbremszylinder 1 sind zwei Kolben 2 und 3 gleitbar angeordnet. Dabei bildet der größere Kolben 2 zusammen mit dem kleineren Kolben 3 und dem Gehäuse 4 des Hauptbremszylinders eine erste Brems kammer 5 für einen Vorderachsbremskreis 6, wobei die entsprechenden Radbremszylinder 7 nur schematisch angedeutet sind.

Der kleinere Kolben 3 schließt zusammen mit dem Gehäuse 4 eine weitere Bremskammer 8 ein, aus welcher der Hinterachsbremskreis 9 mit Bremsflüssigkeit versorgt wird. Auch hier sind die entsprechenden Radbremszylinder 10 nur - schematisch dargestellt.

Die Versorgung der Bremskammer 5 und der Bremskammer 8 erfolgt über vereinfacht dargestellte Versorgungsleitungen 11 und 12 aus Vorratsbehältern 13 und 14.

Der kleinere Kolben 3 stützt sich in der Bremskammer 8 über eine Schraubenfeder 15 gegen das Gehäuse 4 ab. Andererseits beaufschlagt er eine weitere Schraubenfeder 16, welche sich gegen den größeren Kolben 2 abstützt. Ferner ragt vom Kolben 3 ein Notbremsstößel 17 gegen den Kolben 2. Sollte der Vorderachsbremskreis 6 beispielsweise wegen Undichtheit ausfallen, so ist immer noch ein mechanisches Verschieben des Kolbens 3 durch den Kolben 2 über den Notbremsstößel möglich.

Der Kolben 2 ist andererseits der Bremskammer 5 über eine Druckstange 18 mit einem bekannten Bremskraftverstärker 19 verbunden. Diesen greift eine Kolbenstange 20 an, welche von einem Bremspedal 21 unter Druck gesetzt werden kann.

Der Bremskraftverstärker 19 weist im wesentlichen einen Servokolben 22 und ein Bremsventil 23 auf. Dieses Bremsventil 23 ist im vorliegenden Ausführungsbeispiel als Schieberventil dargestellt. Wird ein Bremsdruck über das Bremspedal 21 auf die Kolbenstange 20 übertragen, so verschiebt sich das Bremsventil 23 nach links. Dabei überfährt ein Ringraum 24 eine Radialbohrung 25 im Servokolben 22 und stellt über einen weiteren Ringkanal 26 und eine Bohrung 27 einen Anschluß zu einer Servodruckleitung 28 her. Eine entsprechende Druckflüssigkeit gelangt über diese Verbindung in den Ringraum 24 und von dort über eine Verbindungsleitung 29 in einen entsprechenden Druckraum 30 hinter dem Servokolben 22. In diesem Druckraum 30 baut sich ein entsprechender Servobremsdruck auf, welcher den Servokolben 22 nach links verschiebt.

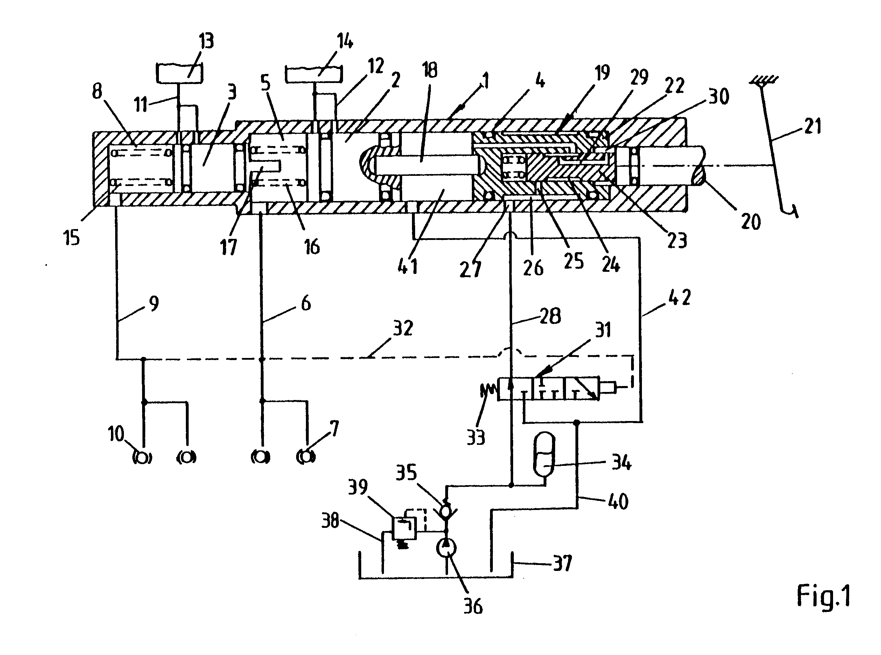

In die Servodruckleitung 28 ist ein erfindungsgemäßes Druckminderventil 31 eingeschaltet. Dieses ist hydraulisch steuerbar und zwar über die Druckleitung 32. Das Druckminderventil 31 schaltet nur dann, wenn ein durch eine Druckfeder 33 eingestellter Druck überschritten wird. Vor dem Überschreiten des eingestellten Druckes steht das Druckminderventil 31 in der in Figur 1 gezeigten Stellung. D. h., die Servodruckleitung 28 ist sowohl mit einem Speicher 34 als auch über ein Rückschlagventil 35 mit einer Pumpe 36 verbunden, welche Bremsflüssigkeit aus einem Vorratsbehälter 37 entnimmt. Zwischen dem Rückschlagventil 35 und der Pumpe 36 ist ein Bypass 38 mit einem Druckbegrenzungsventil 39 vorgesehen.

Überschreitet der Druck in der Druckleitung 32 den an der Druckfeder 33 eingestellten Wert, - schaltet das Druckminderventil 31 in seine Mittelstellung um. Hierdurch wird die Servodruckleitung 28 von ihrer Druckversorgung abgekoppelt. Damit wird nur noch der auf das Bremspedal 21 ausgeübte Bremsdruck wirksam.

Sollte der Druck in der Druckleitung 32 noch weiter ansteigen und einen weiteren vorbestimmten Wert überschreiten, so schaltet das Druckminderventil 31 in seine dritte Schaltstellung, in welcher eine Verbindung zwischen der Servo druckleitung 28 und einer Rückflußleitung 40 zum Vorratsbehälter 37 hergestellt wird. Von dieser Rückflußleitung 40 zweigt eine weitere Leitung 42 zu einer Kammer 41 zwischen Kolben 2 und Bremskraftverstärker 19 ab.

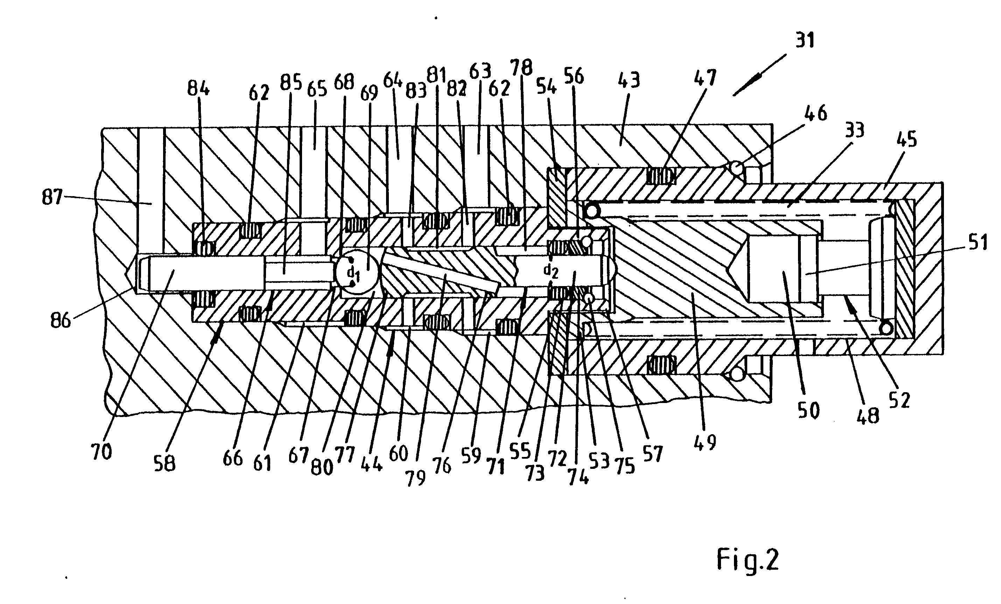

Das erfindungsgemäße Druckminderventil 31 weist gemäß Figur 2 ein Gehäuse 43 mit einer Stufenbohrung 44 auf. In den ersten Teil dieser Stufenbohrung 44 ist ein Einsatz 45 eingesetzt und über einen Sprengring 46 festgelegt. Eine entsprechende Dichtung zwischen Einsatz 45 und dem Gehäuse 43 ist mit 47 gekennzeichnet.

In dem Einsatz 45 befindet sich eine Sacklochbohrung 48 zur Aufnahme der Druckfeder 33. Diese Druckfeder 33 umgibt einen Gleitbolzen 49, welcher eine Stirnbohrung 50 aufweist, in welcher ein Kolben 51 einer Führung 52 gleitet. Dabei untergreift die Druckfeder 33 einen dem Gleitbolzen 49 angeformten Kragen 53.

Sowohl dem Einsatz 45 wie auch dem Kragen 53 liegt eine Lochscheibe 54 auf, deren Loch 55 von einem Hülsenansatz 56 durchgriffen ist, der auch in eine Stirnausnehmung in den Gleitbolzen 49 eingreift. Dieser Hülsenansatz 56 ist Teil eines Stufenzylinders 58. Der Stufenzylinder 58 bildet zusammen mit der Stufenbohrung 44 abgestufte Ringräume 59, 60 und 61. Beidseits jedes Ringraumes 59, 60, 61 sind entsprechende Ringdichtungen 62 vorgesehen.

Der Ringraum 59 steht über eine Radialbohrung 63 mit dem Speicher 34 bzw. der Pumpe 36 in Verbindung. Eine Radialbohrung 64 bildet den Anschluß an die Servodruckleitung 28 zum Bremsventil 23. Die Radialbohrung 65 übernimmt die Verbindung zur Rückflußleitung 40.

In dem Stufenzylinder 58 befindet sich eine Axialbohrung 66, welche durch einen Ringflansch 67 einen Ventilsitz 68 für eine Kugel 69 ausbildet. Diese Kugel 69 sitzt zwischen einem Bolzen 70 und einem Steuerschieber 71. Nach rechts stützt sich der Steuerschieber 71 über einen Bolzenabschnitt 72 gegen den Gleitbolzen 49 ab, wobei der Bolzenabschnitt 72 einen Durchmesser $d_2$ aufweist, welcher einem Durchmesser $d_1$ des Ventilsitzes 68 entspricht. Den Bolzenabschnitt 72 umgibt ein Dichtring 73, gegen welchen sich einerseits eine Scheibe 74 gegen einen Sprengring 75 abstützt. Dieser Dichtring 73 verschließt auf dieser Seite die Axialbohrung 66.

Dem Steuerschieber 71 sind ferner zwei im Abstand zueinander angeordnete Ringflansche 76 und 77 angeformt, über welche der Steuerschieber 71 in der Axialbohrung 66 gleitet. Dabei schließt der Ringflansch 76 mit dem Dichtring 73 einen Ringkanal 78 ein, welcher über eine Querbohrung 79 mit einem Ventilraum 80 in Verbindung steht, in welchem die Kugel 69 lagert.

Zwischen den beiden Ringflanschen 76 und 77 ist ein Verbindungskanal 81 vorgesehen, welcher in Ruhelage des Druckminderventils 31 über entsprechende Bohrungen 82 und 83 die Radialbohrung 63 zum Speicher 34 bzw. zur Pumpe 36 hin mit der Radialbohrung 64 zur Servodruckleitung 28 hin verbindet.

Der Bolzen 70 gleitet abgedichtet über einen Dichtring 84 in der Axialbohrung 66 und greift mit einem Stift 85 durch den Ventilsitz 68, wobei er auf die Kugel 69 trifft. Andererseits sitzt er in einer Bodenkammer 86, welche über eine Radialbohrung 87 mit der Druckleitung 32 in Verbindung steht.

Die Funktionsweise des erfindungsgemäßen Druckminderventils ist folgende:

Bei normalem Bremsbetrieb befindet sich der Steuerschieber 71 in der in Figur 2 gezeigten Ausgangsposition, wobei die im Ventilsitz 68 sitzende Kugel 69 Leckagen verhindert, welche aus dem Verbindungskanal 81 durch die Ringflansche 76 bzw. 77 entstehen könnten. In dieser gezeigten Ausgangsposition ist das Druckminderventil 31 absolut dicht.

Erhöht sich nun der Bremsdruck, aus welchem Grund auch immer, über ein gewünschtes Maß, so wirkt dieser erhöhte Bremsdruck über die Druckleitung 32 und die Radialbohrung 87 auf den Bolzen 70. Dieser Bolzen 70 hebt die Kugel 69 vom Ventilsitz 68 ab und verschiebt den Steuerschieber 71 gegen den Gleitbolzen 49, welcher wiederum unter dem Druck der Druckfeder 33 steht. Dabei überfährt der Ringflansch 77 die Bohrung 83 und -schließt die Verbindung zwischen der Radialbohrung 63 und der Radialbohrung 64. Damit wird die Servodruckleitung 28 geschlossen. Dies bedeutet, daß der Servodruck im Bremskraftverstärker 19 über einen bestimmten Bereich hinweg konstant bleibt.

Sollte sich der Druck in der Druckleitung 32 noch weiter erhöhen, überfährt der Ringflansch 77 die Bohrung 83 vollständig, so daß diese mit dem Ventilraum 80 in Verbindung gerät. Dies bedeutet, daß die Servodruckleitung 28 über den Ventilraum 80 und den Ventilsitz 68 direkt mit der Radialbohrung 65 zur Rückflußleitung 40 in Verbindung gerät.

Dadurch, daß der Bolzenabschnitt 72 den gleichen Durchmesser $d_2$ aufweist wie der Ventilsitz 68, ist die Ventilanordnung kraftausgeglichen, so daß beim Öffnen des Ventils keine Drucksprünge entstehen. Ebenso sind auch der Ventilraum 80 und der Ringkanal 78 über die Querbohrung 79 druckausgeglichen.

**Ansprüche**

1. Bremsanlage mit einem Hauptbremszylinder mit mindestens einer Bremskammer für zumindest einen Bremskreis und einem Bremskraftverstärker, welcher über eine Servodruckleitung mit einem Speicher und/oder einer Pumpe zum Zuführen von Druckmedium verbunden ist, wobei in die Servodruckleitung ein Druckminderventil eingeschaltet ist, welches ferner einen Anschluß über eine Druckleitung an zumindest den einen Bremskreis aufweist, dadurch gekennzeichnet, daß in einer ersten Schaltstellung des Druckminderventils (31) bei normalem Bremsdruck die Servodruckleitung (28) zwischen Bremskraftverstärker (19) und Speicher (34) und/oder Pumpe (36) offen ist, daß bei Überschreiten eines bestimmten Druckes in der Druckleitung (32) in einer zweiten Schaltstellung die Servodruckleitung (28) verschlossen ist und daß bei einem weiteren Überschreiten eines Druckgrenzwertes in einer dritten Schaltstellung die Servodruckleitung (28) mit einer Rückflußleitung (40) verbunden ist.

2. Bremsanlage nach Anspruch 1, dadurch gekennzeichnet, daß für die drei Schaltstellungen ein Steuerschieber (71) in einer Axialbohrung (66) vorgesehen ist, welcher einerseits von einem unter dem Druck der Druckleitung (32) stehenden Bolzen (70) angegriffen wird, andererseits sich aber gegen eine einen vorbestimmten Gegendruck ausübende Druckfeder (33) abstützt.

3. Bremsanlage nach Anspruch 2, dadurch gekennzeichnet, daß die Axialbohrung (66) einen Stufenzylinder (58) durchsetzt, welcher in eine Stufenbohrung (44) eines Gehäuses (43) eingesetzt ist, wobei für einen Anschluß an die Servodruckleitung (28), die Leitung zur Pumpe (36) bzw. zum Speicher (34), die Rückflußleitung (40) und die Druckleitung (32) jeweils eine Radialbohrung (63, 64, 65, 87) das Gehäuse (43) durchsetzt und über einen Ringraum (59, 60, 61) bzw. eine Bodenkammer (86) mit der Axialbohrung (66) in Verbindung steht.

4. Bremsanlage nach Anspruch 3, dadurch gekennzeichnet, daß die einzelnen Ringräume (59, 60, 61) sowie Bodenkammer (86) zueinander mittels Ringdichtungen (62) abgedichtet sind.

5. Bremsanlage nach einem der Ansprüche 2 bis 4, dadurch gekennzeichnet, daß die Servodruckleitung (28) mit dem Speicher (34) bzw. der Pumpe (36) über einen zwischen zwei Ringflanschen (76 und 77) am Steuerschieber (71) gebildeten Verbindungskanal (81) in Verbindung steht, wobei der Steuerschieber (71) mit den Ringflanschen (76, 77) in der Axialbohrung (66) gleitet und sich gegen sie abstützt.

6. Bremsanlage nach Anspruch 5, dadurch gekennzeichnet, daß zwischen dem Steuerschieber (71) und dem Bolzen (70) ein Ventil (68, 69) angeordnet ist, über welches eine Verbindung zwischen der Servodruckleitung (28) und der Rückflußleitung (40) zu einem Vorratsbehälter (37) herstellbar ist.

7. Bremsanlage nach Anspruch 6, dadurch gekennzeichnet, daß das Ventil aus einem durch einen Ringflansch (67) in der Axialbohrung (66) gebildeten Ventilsitz (68) und einer Kugel (69) besteht, auf welche der Bolzen (70), ggfs. mit einem Stift (85), auftrifft.

8. Bremsanlage nach Anspruch 7, dadurch gekennzeichnet, daß zwischen Ventilsitz (68) und Zteuerschieber (71) ein Ventilraum (80) für die Kugel (69) gebildet ist, welcher über eine Querbohrung (79) mit einem Ringkanal (78) hinter dem Ringflansch (76) in Verbindung steht.

9. Bremsanlage nach Anspruch 8, dadurch gekennzeichet, daß der Steuerschieber (71) im Bereich des Ringkanals (78) als Bolzenabschnitt (72) ausgebildet ist, welcher einen Durchmesser ($d_2$) aufweist, der dem Durchmesser ($d_1$) des Ventilsitzes (68) entspricht.

10. Bremsanlage nach Anspruch 9, dadurch gekennzeichnet, daß der Bolzenabschnitt (72) von einem Dichtring (73) umgeben ist, welcher den Ringkanal (78) nach außen abdichtet.

11. Bremsanlage nach Anspruch 10, dadurch gekennzeichnet, daß der Bolzenabschnitt (72) auf einen Gleitbolzen (49) trifft, welcher von der Druckfeder (33) umfangen ist und sich gegen diese abstützt.

12. Bremsanlage nach Anspruch 11, dadurch gekennzeichnet, daß der Gleitbolzen (49) bei seiner Axialbewegung gegen den Druck der Druckfeder (33) mittels einer Führung (52) geführt ist.

Fig.1

EP 0 296 342 A2

Fig.2